# EUROPEAN PATENT SPECIFICATION

(11) **EP 3 597 339 B1**
(45) Date of publication and mention of the grant of the patent: **30.12.2020**
(21) Application number: 18214407.1
(22) Date of filing: 20.12.2018
(51) Int. Cl.: B23H 7/08, C22F 1/08, C23C 28/00

(54) **ELECTRODE WIRE FOR ELECTRO-DISCHARGE MACHINING AND METHOD FOR MANUFACTURING THE SAME**
ELEKTRODENDRAHT ZUM ELEKTROERODIEREN UND VERFAHREN ZUR HERSTELLUNG DAVON
FIL D'ÉLECTRODE POUR L'USINAGE PAR DÉCHARGE ÉLECTRIQUE ET SON PROCÉDÉ DE FABRICATION

(30) Priority: 18.07.2018 CN 201810790371
(43) Date of publication of application: 22.01.2020
(73) Proprietor: KSPARK METAL GROUP CO., LTD., Victoria, Mahé (SC)
(72) Inventor: Hong, Shaoqian, Ningbo, 315010 (CN); Pei, Qi, Ningbo Zhejiang 315000 (CN)
(74) Representative: Cabinet Chaillot

(56) References cited:
- WO-A1-2018/071284
- FR-A1- 2 881 973
- US-A- 4 924 050
- US-A1- 2016 039 027

## Description

### FIELD OF THE INVENTION

The invention relates to an electrode wire, and particularly to an electrode wire for electro-discharge machining according to the preamble of claim 1 and to a method for manufacturing the same. Such a wire is known from FR 2 881 973.

### BACKGROUND OF THE INVENTION

In recent years, machining technologies have been changing quickly, and wire-cut electro-discharge machining has also been developing rapidly as a special precision machining technology. An important part of the development of a wire cutting technology relies on the development of an electrode wire technology. Only electrode wires with excellent performance can be efficiently machined into high-quality and high-precision products. Since the invention of galvanized electrode wires in the 1970s and 1980s, various wire electrodes such as ordinary brass electrode wires, galvanized electrode wires, molybdenum wires, tungsten wires, and composite wires (consisting of steel wires in inner layers and copper, etc. on outer surfaces) have successively emerged on the market. At present, the commonly used electrode wires include molybdenum wires (Φ0.08-Φ0.2 mm), tungsten wires (Φ0.03-Φ0.1 mm), brass wires (Φ0.1-Φ0.3 mm), coated electrode wires (Φ0.1-Φ0.3 mm) and the like. Low-speed wire cutting is a main direction of international wire cutting, in which the electrode wires used such as brass wires and zinc-coated wires will be soon dominant in the variety of wire-cut electrode wire materials.

With the continuous advancement of material processing technologies and machining technologies, electrode wires have undergone a conversion from ordinary brass electrode wires to plated electrode wires. A galvanized electrode wire for low-speed wire cutting generally comprises a core material which is made of ordinary brass and externally plated with a layer of zinc. Due to the vaporization of zinc during cutting, the discharge of such electrode wire is relatively stable and the cut surface is smoother than that of an ordinary brass wire. However, for the alloy composition of a brass electrode wire, both the economic cost and the machining rate should be considered; and for a brass wire with a zinc content of 35% or above, in spite of reduced cost, the machining rate also becomes lower.

Accordingly, those skilled in the art are devoted to developing an electrode wire for electro-discharge machining and providing a manufacturing method thereof based on the consideration of economic cost and efficiency.

### SUMMARY OF THE INVENTION

In view of the above defects in the prior art, a technical problem to be solved by the invention is to develop an electrode wire for electro-discharge machining, and to provide a product with low manufacturing cost and excellent performance and a method for manufacturing the same.

To achieve the above object, the invention provides an electrode wire for electro-discharge machining, which comprises a core material and a surface metal layer, a transition layer being arranged between the core material and the surface metal layer, wherein,
the core material comprises a brass alloy as a main component and a balance amount of zinc and inevitable impurities; and the surface metal layer comprises zinc oxide and a balance amount of copper and inevitable impurities, a transition layer is arranged between the core material and the surface metal layer, the transition layer comprises a copper-zinc alloy as a main component, and irregular cracks are distributed on the zinc oxide layer; and
the core material has a diameter of 0.65-1.48 mm, the surface metal layer has a thickness of 0.45-10.23 µm, the maximum thickness of the cracks is less than or equal to 4.5 µm, and the maximum spacing of the cracks is 17 µm.

Further, the content of the brass alloy is 48-72 wt% and the impurity content is less than or equal to 0.38 wt% in the core material; and the content of the zinc oxide is 65-87 wt% and the balance content is less than or equal to 0.15 wt% in the surface metal layer.

The invention also provides a method for manufacturing the electrode wire for electro-discharge machining, which comprises the following steps:
step (1): after raw materials containing copper and zinc are qualified by chemical analysis, the raw materials are compounded and mixed, the resulting mixture is charged into a line-frequency induction furnace for smelting, and an alloy wire stock is produced by upward casting, wherein the temperature during casting is gradually increased from a preheating temperature of 60°C to a maximum temperature of 679°C;
step (2): the manufactured alloy wire stock is scalped followed by cold rolling and softening annealing to manufacture a rod stock having a specification of 7-9.8 mm;
step (3): the obtained rod stock is subjected to plastic stretching of different passes to manufacture a 0.88-1.65 mm base core which is then degreased, acid-pickled and rinsed with water to remove external impurities;
step (4): electrodeposition is performed on the base core by chemical plating, spray coating or hot dip plating to obtain a composite stock having a zinc oxide layer deposited on the surface thereof;
step (5): the composite stock is subjected to a stretching-annealing process to obtain a pre-finished wire stock having a conforming size, wherein the stretching speed is 800-2800 m/min, the annealing voltage is 27-121 V and the annealing current is 13-43A;
step (6): the obtained pre-finished wire stock is subjected to surface treatment, zinc is melted at a temperature of 230-520°C by an internal hot air flow, an irregular shape is formed on the surface of the core material by surface treatment, and meanwhile the temperature is gradually increased to form a composite plating from copper and zinc, thus finally obtaining an electrode wire product; and
step (7): the electrode wire is taken up, qualified through quality inspection, then packaged and transported.

Further, the softening annealing in the step (2) is carried out by a two-stage annealing method, in which the first stage is a low-temperature annealing stage, the temperature is 49-267°C and the holding time is 1.7-23 h; and the second stage is a high-temperature annealing stage, the temperature is 267.2-766°C and the holding time is 2.3-33 h.

Still further, the annealing distance of the first stage is 0.98-3.78 m and the annealing distance of the second stage is 4.12-11 m; and the annealing speed of the two stages is 7-570 m/min.

Still further, the rod stock is subjected to heat treatment at a temperature of 53-600°C for 1-8.8 h prior to the plastic stretching.

Further, in the step (6), in the surface treatment, the pre-finished wire stock is heated in a heating furnace which is provided with a conductive coil surrounding a closed pipeline, the conductive coil is supplied with power while heating is performed, and the power source supplies an alternating voltage.

Preferably, rolling is carried out by a roller simultaneously with heating to perform surface treatment on the core material such that the oxide layer is crystallized to crack.

Preferably, dry sandblasting is carried out simultaneously with heating, and a sand material is blasted onto the pre-finished wire stock such that the surface is eroded to crack.

Further, the dry sandblasting is used to accelerate the blasting of the sand material with compressed air as power by a pneumatic sand blasting device, or to blast the sand material with a centrifugal force by a hoist and a high-speed turntable.

### Beneficial effects:

The electrode wire for electro-discharge machining according to the invention can be protected and corrosion-resistant due to a layer of zinc oxide covered outside the core material; and irregular cracks are formed on the surface, which can not only promote the introduction of lubricating fluid to a machining interface between a mold and the electrode wire in the wire drawing process to improve the wire drawing yield, but also improve the ability of the electrode wire to carry cutting fluid in the cutting process by the cooperation between the cracks and the cutting fluid, thereby facilitating improving the cutting efficiency, machining yield and cutting quality.

The electrode wire of the invention is manufactured in a compact manner by a two-step annealing process and a stretching-annealing process, and annealing with an on-line DC voltage is carried out instead of the original oxidation annealing to reduce the copper loss in oxidation annealing and maximize resource utilization; and surface treatment is carried out by a relatively simple sandblasting process, which brings the production of cracks under control and improves the quality of the finished product.

The concept, specific structure and technical effects of the invention will be further described below in conjunction with the embodiments so as to fully understand the objects, features and effects of the invention.

### DETAILED DESCRIPTION OF THE INVENTION

### Embodiment 1

An electrode wire for electro-discharge machining comprises a core material and a surface metal layer, a transition layer being arranged between the core material and the surface metal layer, wherein the core material comprises a brass alloy as a main component and a balance amount of zinc and inevitable impurities; and the surface metal layer comprises zinc oxide and a balance amount of copper and inevitable impurities, a transition layer is arranged between the core material and the surface metal layer, the transition layer comprises a copper-zinc alloy as a main component, and irregular cracks are distributed on the zinc oxide layer.

A method for manufacturing the electrode wire specifically comprises the following steps:
step (1): raw materials such as copper, zinc, phosphorus, magnesium, calcium, aluminum and rare earth are compounded in a certain ratio according to the alloy composition, wherein the specific weight in this embodiment is as follows: 45.430 kg of Cu, 30.250 kg of Zn, 0.605 kg of P, 0.076 kg of Mg, 0.040 kg of Ca, 3.010 kg of Al, 0.025 kg of La and 0.010 kg of Zr; after the raw materials are qualified by chemical analysis, the formulated mixture is charged into a line-frequency induction furnace for smelting, wherein the melting temperature is set to 1180°C and the holding time is 30 min; and then an alloy wire stock is produced by upward casting, wherein the temperature during casting is gradually increased from a preheating temperature of 60°C to a maximum temperature of 679°C;
step (2): the manufactured alloy wire stock is scalped followed by cold rolling and softening annealing to manufacture a rod stock having a specification of 7 mm, wherein the softening annealing is carried out by a two-stage annealing method, in which the first stage is a low-temperature annealing stage, the temperature is 49-267°C, and the holding time is 10 h after 267°C is reached; the second stage is a high-temperature annealing stage, the temperature is 267.2-766°C, and the holding time is 8 h after 766°C is reached; the annealing distance of the first stage is 0.98 m and the annealing distance of the second stage is 4.12 m; and the annealing speed of the two stages is 310 m/min;
step (3): the obtained rod stock is subjected to plastic stretching of different passes to manufacture a 0.88 mm base core which is then degreased, acid-pickled and rinsed with water to remove external impurities, wherein the rod stock is subjected to heat treatment at a temperature of 53-600°C for 1.5 h prior to the plastic stretching;
step (4): electrodeposition is performed on the base core by chemical plating, spray coating or hot dip plating to obtain a composite stock having a zinc oxide layer deposited on the surface thereof;
step (5): the composite stock is subjected to a stretching-annealing process to obtain a pre-finished wire stock having a conforming size, wherein the stretching-annealing process is carried out by annealing the composite stock with current in a stretching line, the stretching speed is 800-2800 m/min, the annealing voltage is 27-121 V, the annealing current is 13-43 A, and the annealing voltage and current are adjusted according to the desired annealing process;
step (6): the obtained pre-finished wire stock is subjected to surface treatment, during which the pre-finished wire stock is heated in a heating furnace which is provided with a conductive coil surrounding a closed pipeline, the conductive coil is supplied with power while heating is performed, and the power source supplies an alternating voltage; zinc is melted at a temperature of 230-520°C by an internal hot air flow, and rolling is simultaneously carried out by a roller to perform surface treatment on the core material such that the oxide layer is crystallized to crack; and meanwhile the temperature is gradually increased to form a composite plating from copper and zinc, which is then subjected to stress-relief annealing at 180°C for 2 s, thus finally obtaining an electrode wire product; and
step (7): the electrode wire is taken up, qualified through quality inspection, then packaged and transported.

The electrode wire product obtained by the above manufacturing method has the following parameters:
the core material has a diameter of 0.65 mm, the surface metal layer has a thickness of 0.55 µm, the maximum thickness of the cracks is 1.5 µm, and the maximum spacing of the cracks is 17 µm; the content of the brass alloy is 48 wt% and the impurity content is less than or equal to 0.38 wt% in the core material; and the content of the zinc oxide is 77 wt% and the balance content is less than or equal to 0.15 wt% in the surface metal layer.

### Embodiment 2

An electrode wire for electro-discharge machining comprises a core material and a surface metal layer, a transition layer being arranged between the core material and the surface metal layer, wherein the core material comprises a brass alloy as a main component and a balance amount of zinc and inevitable impurities; and the surface metal layer comprises zinc oxide and a balance amount of copper and inevitable impurities, a transition layer is arranged between the core material and the surface metal layer, the transition layer comprises a copper-zinc alloy as a main component, and irregular cracks are distributed on the zinc oxide layer.

A method for manufacturing the electrode wire specifically comprises the following steps:
step (1): raw materials such as copper, zinc, phosphorus, magnesium, calcium, aluminum and rare earth are compounded in a certain ratio according to the alloy composition, wherein the specific weight in this embodiment is as follows: 46.530 kg of Cu, 31.780 kg of Zn, 0.503 kg of P, 0.095 kg of Mg, 0.060 kg of Ca, 2.097 kg of Al, 0.035 kg of La and 0.020 kg of Zr; after the raw materials are qualified by chemical analysis, the formulated mixture is charged into a line-frequency induction furnace for smelting, wherein the melting temperature is set to 1180°C and the holding time is 30 min; and then an alloy wire stock is produced by upward casting, wherein the temperature during casting is gradually increased from a preheating temperature of 60°C to a maximum temperature of 679°C;
step (2): the manufactured alloy wire stock is scalped followed by cold rolling and softening annealing to manufacture a rod stock having a specification of 9.8 mm, wherein the softening annealing is carried out by a two-stage annealing method, in which the first stage is a low-temperature annealing stage, the temperature is 49-267°C and the holding time is 23 h; the second stage is a high-temperature annealing stage, the temperature is 267.2-766°C and the holding time is 33 h; the annealing distance of the first stage is 3.78 m and the annealing distance of the second stage is 11 m; and the annealing speed of the two stages is 570 m/min;
step (3): the obtained rod stock is subjected to plastic stretching of different passes to manufacture a 1.65 mm base core which is then degreased, acid-pickled and rinsed with water to remove external impurities, wherein the rod stock is subjected to heat treatment at a temperature of 53-600°C for 8.8 h prior to the plastic stretching;
step (4): electrodeposition is performed on the base core by chemical plating, spray coating or hot dip plating to obtain a composite stock having a zinc oxide layer deposited on the surface thereof;
step (5): the composite stock is subjected to a stretching-annealing process to obtain a pre-finished wire stock having a conforming size, wherein the stretching-annealing process is carried out by annealing the composite stock with current in a stretching line, the stretching speed is 800-2800 m/min, the annealing voltage is 27-121 V, the annealing current is 13-43 A, and the annealing voltage and current are adjusted according to the desired annealing process;
step (6): the obtained pre-finished wire stock is subjected to surface treatment, during which the pre-finished wire stock is heated in a heating furnace which is provided with a conductive coil surrounding a closed pipeline, the conductive coil is supplied with power while heating is performed, and the power source supplies an alternating voltage; zinc is melted at a temperature of 230-520°C by an internal hot air flow, the blasting of a sand material is accelerated with compressed air as power by a pneumatic sand blasting device, or the sand material is blasted with a centrifugal force by a hoist and a high-speed turntable, and the sand material is blasted onto the pre-finished wire stock such that the surface is eroded to crack; and meanwhile the temperature is gradually increased to form a composite plating from copper and zinc, which is then subjected to stress-relief annealing at 180°C for 2 s, thus finally obtaining an electrode wire product; and
step (7): the electrode wire is taken up, qualified through quality inspection, then packaged and transported.

The electrode wire product obtained by the above manufacturing method has the following parameters:
the core material has a diameter of 1.48 mm, the surface metal layer has a thickness of 10.23 µm, the maximum thickness of the cracks is 4.5 µm, and the maximum spacing of the cracks is 17 µm; the content of the brass alloy is 72 wt% and the impurity content is less than or equal to 0.38 wt% in the core material; and the content of the zinc oxide is 87 wt% and the balance content is less than or equal to 0.15 wt% in the surface metal layer.

### Embodiment 3

An electrode wire for electro-discharge machining comprises a core material and a surface metal layer, a transition layer being arranged between the core material and the surface metal layer, wherein the core material comprises a brass alloy as a main component and a balance amount of zinc and inevitable impurities; and the surface metal layer comprises zinc oxide and a balance amount of copper and inevitable impurities, a transition layer is arranged between the core material and the surface metal layer, the transition layer comprises a copper-zinc alloy as a main component, and irregular cracks are distributed on the zinc oxide layer.

A method for manufacturing the electrode wire specifically comprises the following steps:
step (1): raw materials such as copper, zinc, phosphorus, magnesium, calcium, aluminum and rare earth are compounded in a certain ratio according to the alloy composition; after the raw materials are qualified by chemical analysis, the formulated mixture is charged into a line-frequency induction furnace for smelting, wherein the melting temperature is set to 1180°C and the holding time is 30 min; and then an alloy wire stock is produced by upward casting, wherein the temperature during casting is gradually increased from a preheating temperature of 60°C to a maximum temperature of 679°C;
step (2): the manufactured alloy wire stock is scalped followed by cold rolling and softening annealing to manufacture a rod stock having a specification of 7.7 mm, wherein the softening annealing is carried out by a two-stage annealing method, in which the first stage is a low-temperature annealing stage, the temperature is 49-267°C and the holding time is 17 h; the second stage is a high-temperature annealing stage, the temperature is 267.2-766°C and the holding time is 20 h; the annealing distance of the first stage is 1.96 m and the annealing distance of the second stage is 5.33 m; and the annealing speed of the two stages is 450 m/min;
step (3): the obtained rod stock is subjected to plastic stretching of different passes to manufacture a 1.21 mm base core which is then degreased, acid-pickled and rinsed with water to remove external impurities, wherein the rod stock is subjected to heat treatment at a temperature of 53-600°C for 3.2 h prior to the plastic stretching;
step (4): electrodeposition is performed on the base core by chemical plating, spray coating or hot dip plating to obtain a composite stock having a zinc oxide layer deposited on the surface thereof;
step (5): the composite stock is subjected to a stretching-annealing process to obtain a pre-finished wire stock having a conforming size, wherein the stretching-annealing process is carried out by annealing the composite stock with current in a stretching line, the stretching speed is 800-2800 m/min, the annealing voltage is 27-121 V, the annealing current is 13-43 A, and the annealing voltage and current are adjusted according to the desired annealing process;
step (6): the obtained pre-finished wire stock is subjected to surface treatment, during which the pre-finished wire stock is heated in a heating furnace which is provided with a conductive coil surrounding a closed pipeline, the conductive coil is supplied with power while heating is performed, and the power source supplies an alternating voltage; zinc is melted at a temperature of 230-520°C by an internal hot air flow, dry sandblasting is simultaneously carried out in which the blasting of a sand material is accelerated with compressed air as power by a pneumatic sand blasting device, or the sand material is blasted with a centrifugal force by a hoist and a high-speed turntable, and the sand material is blasted onto the pre-finished wire stock such that the surface is eroded to crack; and meanwhile the temperature is gradually increased to form a composite plating from copper and zinc, which is then subjected to stress-relief annealing at 180°C for 2 s, thus finally obtaining an electrode wire product; and
step (7): the electrode wire is taken up, qualified through quality inspection, then packaged and transported.

The electrode wire product obtained by the above manufacturing method has the following parameters:
the core material has a diameter of 0.86 mm, the surface metal layer has a thickness of 2.8 µm, the maximum thickness of the cracks is 2.5 µm, and the maximum spacing of the cracks is 17 µm; the content of the brass alloy is 55 wt% and the impurity content is less than or equal to 0.38 wt% in the core material; and the content of the zinc oxide is 67 wt% and the balance content is less than or equal to 0.15 wt% in the surface metal layer.

### Embodiment 4

An electrode wire for electro-discharge machining comprises a core material and a surface metal layer, a transition layer being arranged between the core material and the surface metal layer, wherein the core material comprises a brass alloy as a main component and a balance amount of zinc and inevitable impurities; and the surface metal layer comprises zinc oxide and a balance amount of copper and inevitable impurities, a transition layer is arranged between the core material and the surface metal layer, the transition layer comprises a copper-zinc alloy as a main component, and irregular cracks are distributed on the zinc oxide layer.

A method for manufacturing the electrode wire specifically comprises the following steps:
step (1): raw materials such as copper, zinc, phosphorus, magnesium, calcium, aluminum and rare earth are compounded in a certain ratio according to the alloy composition; after the raw materials are qualified by chemical analysis, the formulated mixture is charged into a line-frequency induction furnace for smelting, wherein the melting temperature is set to 1180°C and the holding time is 30 min; and then an alloy wire stock is produced by upward casting, wherein the temperature during casting is gradually increased from a preheating temperature of 60°C to a maximum temperature of 679°C;
step (2): the manufactured alloy wire stock is scalped followed by cold rolling and softening annealing to manufacture a rod stock having a specification of 7.5 mm, wherein the softening annealing is carried out by a two-stage annealing method, in which the first stage is a low-temperature annealing stage, the temperature is 49-267°C and the holding time is 15.5 h; the second stage is a high-temperature annealing stage, the temperature is 267.2-766°C and the holding time is 20.3 h; the annealing distance of the first stage is 2.35 m and the annealing distance of the second stage is 7.78 m; and the annealing speed of the two stages is 450 m/min;
step (3): the obtained rod stock is subjected to plastic stretching of different passes to manufacture a 1.45 mm base core which is then degreased, acid-pickled and rinsed with water to remove external impurities, wherein the rod stock is subjected to heat treatment at a temperature of 53-600°C for 4.8 h prior to the plastic stretching;
step (4): electrodeposition is performed on the base core by chemical plating, spray coating or hot dip plating to obtain a composite stock having a zinc oxide layer deposited on the surface thereof;
step (5): the composite stock is subjected to a stretching-annealing process to obtain a pre-finished wire stock having a conforming size, wherein the stretching-annealing process is carried out by annealing the composite stock with current in a stretching line, the stretching speed is 800-2800 m/min, the annealing voltage is 27-121 V, the annealing current is 13-43 A, and the annealing voltage and current are adjusted according to the desired annealing process;
step (6): the obtained pre-finished wire stock is subjected to surface treatment, during which the pre-finished wire stock is heated in a heating furnace which is provided with a conductive coil surrounding a closed pipeline, the conductive coil is supplied with power while heating is performed, and the power source supplies an alternating voltage; zinc is melted at a temperature of 230-520°C by an internal hot air flow, and rolling is simultaneously carried out by a roller to perform surface treatment on the core material such that the oxide layer is crystallized to crack; and meanwhile the temperature is gradually increased to form a composite plating from copper and zinc, which is then subjected to stress-relief annealing at 180°C for 2 s, thus finally obtaining an electrode wire product; and
step (7): the electrode wire is taken up, qualified through quality inspection, then packaged and transported.

The electrode wire product obtained by the above manufacturing method has the following parameters:
the core material has a diameter of 0.96 mm, the surface metal layer has a thickness of 4.3 µm, the maximum thickness of the cracks is 4.1 µm, and the maximum spacing of the cracks is 17 µm; the content of the brass alloy is 61 wt% and the impurity content is less than or equal to 0.38 wt% in the core material; and the content of the zinc oxide is 65 wt% and the balance content is less than or equal to 0.15 wt% in the surface metal layer.

### Embodiment 5

An electrode wire for electro-discharge machining comprises a core material and a surface metal layer, a transition layer being arranged between the core material and the surface metal layer, wherein the core material comprises a brass alloy as a main component and a balance amount of zinc and inevitable impurities; and the surface metal layer comprises zinc oxide and a balance amount of copper and inevitable impurities, a transition layer is arranged between the core material and the surface metal layer, the transition layer comprises a copper-zinc alloy as a main component, and irregular cracks are distributed on the zinc oxide layer.

A method for manufacturing the electrode wire specifically comprises the following steps:
step (1): raw materials such as copper, zinc, phosphorus, magnesium, calcium, aluminum and rare earth are compounded in a certain ratio according to the alloy composition; after the raw materials are qualified by chemical analysis, the formulated mixture is charged into a line-frequency induction furnace for smelting, wherein the melting temperature is set to 1180°C and the holding time is 30 min; and then an alloy wire stock is produced by upward casting, wherein the temperature during casting is gradually increased from a preheating temperature of 60°C to a maximum temperature of 679°C;
step (2): the manufactured alloy wire stock is scalped followed by cold rolling and softening annealing to manufacture a rod stock having a specification of 8.0 mm, wherein the softening annealing is carried out by a two-stage annealing method, in which the first stage is a low-temperature annealing stage, the temperature is 49-267°C and the holding time is 14 h; the second stage is a high-temperature annealing stage, the temperature is 267.2-766°C and the holding time is 19 h; the annealing distance of the first stage is 2.50 m and the annealing distance of the second stage is 7.50 m; and the annealing speed of the two stages is 500 m/min;
step (3): the obtained rod stock is subjected to plastic stretching of different passes to manufacture a 1.35 mm base core which is then degreased, acid-pickled and rinsed with water to remove external impurities, wherein the rod stock is subjected to heat treatment at a temperature of 53-600°C for 1-8.8 h prior to the plastic stretching;
step (4): electrodeposition is performed on the base core by chemical plating, spray coating or hot dip plating to obtain a composite stock having a zinc oxide layer deposited on the surface thereof;
step (5): the composite stock is subjected to a stretching-annealing process to obtain a pre-finished wire stock having a conforming size, wherein the stretching-annealing process is carried out by annealing the composite stock with current in a stretching line, the stretching speed is 800-2800 m/min, the annealing voltage is 27-121 V, the annealing current is 13-43 A, and the annealing voltage and current are adjusted according to the desired annealing process;
step (6): the obtained pre-finished wire stock is subjected to surface treatment, during which the pre-finished wire stock is heated in a heating furnace which is provided with a conductive coil surrounding a closed pipeline, the conductive coil is supplied with power while heating is performed, and the power source supplies an alternating voltage; zinc is melted at a temperature of 230-520°C by an internal hot air flow, and an irregular shape is formed on the surface of the core material by surface treatment; and meanwhile the temperature is gradually increased to form a composite plating from copper and zinc, which is then subjected to stress-relief annealing at 180°C for 2 s, thus finally obtaining an electrode wire product; and
step (7): the electrode wire is taken up, qualified through quality inspection, then packaged and transported.

Optionally, rolling is carried out by a roller simultaneously with heating to perform surface treatment on the core material such that the oxide layer is crystallized to crack.

Optionally, dry sandblasting is carried out simultaneously with heating, wherein the blasting of a sand material is accelerated with compressed air as power by a pneumatic sand blasting device, or the sand material is blasted with a centrifugal force by a hoist and a high-speed turntable, and the sand material is blasted onto the pre-finished wire stock such that the surface is eroded to crack.

The electrode wire product obtained by the above manufacturing method has the following parameters:
the core material has a diameter of 1.01 mm, the surface metal layer has a thickness of 5.2 µm, the maximum thickness of the cracks is 4.5 µm, and the maximum spacing of the cracks is 17 µm; the content of the brass alloy is 61 wt% and the impurity content is less than or equal to 0.38 wt% in the core material; and the content of the zinc oxide is 71 wt% and the balance content is less than or equal to 0.15 wt% in the surface metal layer.

The thickness and zinc content of the surface metal layers and the thickness of the cracks of the electrode wires for electro-discharge machining obtained by the manufacturing methods of the above embodiments of the invention are listed as follows:

| | Diameter of core material (mm) | Thickness of surface metal layer (µm) | Content of zinc oxide in surface layer (wt%) | Maximum thickness of crack (µm) |
|---|---|---|---|---|
| Embodiment 1 | 0.65 | | | |
| | 0.55 | 77 | 1.5 | |
| Embodiment 2 | 1.48 | 10.23 | 87 | 4.5 |
| Embodiment 3 | 0.86 | 2.8 | 67 | 2.5 |
| Embodiment 4 | 0.96 | 4.3 | 65 | 4.1 |
| Embodiment 5 | 1.01 | 5.2 | 71 | 3.3 |

The obtained electrode wires for electro-discharge machining are tested for their comprehensive mechanical properties on a universal electronic tensile tester under microcomputer-based automatic control and for their electrical conductivity using a Wheatstone bridge method. The prepared electrode wires are tested for their EDM performance using grade 45 steel as a workpiece, and their service performance is compared with that of a brass electrode wire on the market in the following table.

| | Electrical conductivity (IACS%) | Tensile strength (Mpa) | Cutting speed | Roughness of cut surface /µm | Damage to cutter |
|---|---|---|---|---|---|
| Brass electrode wire | 21 | 1030 | 1 | 0.37 | Slight |
| Embodiment 1 | 21 | 980 | 1.13 | 0.34 | Slight |
| Embodiment 2 | 22 | 990 | 1.1 | 0.36 | Slight |
| Embodiment 3 | 22 | 1000 | 1.16 | 0.35 | Slight |
| Embodiment 4 | 21.8 | 1020 | 1.16 | 0.33 | Slight |
| Embodiment 5 | 22.3 | 1010 | 1.18 | 0.33 | Slight |

It can be seen from the above table that the electrode wire of the invention has improved electrical conductivity as compared with the ordinary brass electrode wire, and its surface roughness is slightly improved after cutting; its mechanical properties such as tensile strength are decreased as compared with those of the ordinary brass electrode wire, but still fall within the numerical range of the electrode wire in cutting application, and do not affect its use; the damage to a cutter is slight; in addition, its cutting speed is improved as compared with that of the ordinary brass wire, thus improving the efficiency of electro-discharge machining.

The preferred embodiments of the invention have been described above in detail. It should be understood that the ordinary persons skilled in the art can make many modifications and variations without inventive work according to the concept of the invention. Accordingly, any technical solution that can be obtained by those skilled in the art according to the concept of the invention through logic analysis and reasoning or limited experimentation based on the prior art should fall within the protection scope determined by the claims.

## Claims

1. An electrode wire for electro-discharge machining, comprising a core material and a surface metal layer, a transition layer being arranged between the core material and the surface metal layer, wherein,
the core material comprises a brass alloy as a main component and a balance amount of zinc and inevitable impurities; and the surface metal layer comprises zinc oxide as a main component and a balance amount of copper and inevitable impurities, a transition layer is arranged between the core material and the surface metal layer, the transition layer comprises a copper-zinc alloy as a main component, and irregular cracks are distributed on the zinc oxide layer; **characterised in that** the core material has a diameter of 0.65-1.48 mm, the surface metal layer has a thickness of 0.45-10.23 µm, the maximum thickness of the cracks is less than or equal to 4.5 µm, and the maximum spacing of the cracks is 17 µm.

2. The electrode wire for electro-discharge machining according to claim 1, wherein the content of the brass alloy is 48-72 wt% and the impurity content is less than or equal to 0.38 wt% in the core material; and the content of the zinc oxide is 65-87 wt% and the balance content is less than or equal to 0.15 wt% in the surface metal layer.

3. A method for manufacturing the electrode wire for electro-discharge machining according to claim 1 or 2, comprising the following steps:
step (1): after raw materials containing copper and zinc are qualified by chemical analysis, the raw materials are compounded and mixed, the resulting mixture is charged into a line-frequency induction furnace for smelting, and an alloy wire stock is produced by upward casting, wherein the temperature during casting is gradually increased from a preheating temperature of 60°C to a maximum temperature of 679°C;
step (2): the manufactured alloy wire stock is scalped followed by cold rolling and softening annealing to manufacture a rod stock having a specification of 7-9.8 mm;
step (3): the obtained rod stock is subjected to plastic stretching of different passes to manufacture a 0.88-1.65 mm base core which is then degreased, acid-pickled and rinsed with water to remove external impurities;
step (4): electrodeposition is performed on the base core by chemical plating, spray coating or hot dip plating to obtain a composite stock having a zinc oxide layer deposited on the surface thereof;
step (5): the composite stock is subjected to a stretching-annealing process to obtain a pre-finished wire stock having a conforming size, wherein the stretching speed is 800-2800 m/min, the annealing voltage is 27-121 V and the annealing current is 13-43 A;
step (6): the obtained pre-finished wire stock is subjected to surface treatment, zinc is melted at a temperature of 230-520°C by an internal hot air flow, an irregular shape is formed on the surface of the core material by surface treatment, and meanwhile the temperature is gradually increased to form a composite plating from copper and zinc, thus finally obtaining an electrode wire product; and
step (7): the electrode wire is taken up, qualified through quality inspection, then packaged and transported.

4. The method for manufacturing the electrode wire for electro-discharge machining according to claim 3, wherein the softening annealing is carried out by a two-stage annealing method, in which the first stage is a low-temperature annealing stage, the temperature is 49-267°C and the holding time is 1.7-23 h; and the second stage is a high-temperature annealing stage, the temperature is 267.2-766°C and the holding time is 2.3-33 h.

5. The method for manufacturing the electrode wire for electro-discharge machining according to claim 4, wherein the annealing distance of the first stage is 0.98-3.78 m and the annealing distance of the second stage is 4.12-11 m; and the annealing speed of the two stages is 7-570 m/min.

6. The method for manufacturing the electrode wire for electro-discharge machining according to claim 3, wherein the rod stock is subjected to heat treatment at a temperature of 53-600°C for 1-8.8 h prior to the plastic stretching.

7. The method for manufacturing the electrode wire for electro-discharge machining according to claim 3, wherein in the surface treatment, the pre-finished wire stock is heated in a heating furnace which is provided with a conductive coil surrounding a closed pipeline, the conductive coil is supplied with power while heating is performed, and the power source supplies an alternating voltage.

8. The method for manufacturing the electrode wire for electro-discharge machining according to claim 7, wherein rolling is carried out by a roller simultaneously with heating to perform surface treatment on the core material such that the oxide layer is crystallized to crack.

9. The method for manufacturing the electrode wire for electro-discharge machining according to claim 7, wherein dry sandblasting is carried out simultaneously with heating, and a sand material is blasted onto the pre-finished wire stock such that the surface is eroded to crack.

10. The method for manufacturing the electrode wire for electro-discharge machining according to claim 9, wherein the dry sandblasting is used to accelerate the blasting of the sand material with compressed air as power by a pneumatic sand blasting device, or to blast the sand material with a centrifugal force by a hoist and a high-speed turntable.

## Patentansprüche

1. Elektrodendraht für Elektroerosion, umfassend ein Kernmaterial und eine Oberflächenmetallschicht, wobei eine Übergangsschicht zwischen dem Kernmaterial und der Oberflächenmetallschicht angeordnet ist, wobei
das Kernmaterial eine Messinglegierung als eine Hauptkomponente und eine Restmenge von Zink und unvermeidlichen Fremdstoffen aufweist; und die Oberflächenmetallschicht Zinkoxid als eine Hauptkomponente und eine Restmenge von Kupfer und unvermeidlichen Fremdstoffen aufweist, wobei eine Übergangsschicht zwischen dem Kernmaterial und der Oberflächenmetallschicht angeordnet ist, wobei die Übergangsschicht eine Kupfer-Zink-Legierung als eine Hauptkomponente aufweist, und unregelmäßige Risse auf der Zinkoxidschicht verteilt sind, **dadurch gekennzeichnet, dass**
das Kernmaterial einen Durchmesser von 0,65 bis 1,48 mm aufweist, die Oberflächenmetallschicht eine Dicke von 0,45 bis 10,23 µm aufweist, die maximale Dicke der Risse kleiner als oder gleich 4,5 µm ist, und der maximale Abstand der Risse 17 µm beträgt.

2. Elektrodendraht für Elektroerosion nach Anspruch 1, wobei im Kernmaterial der Gehalt der Messinglegierung 48 bis 72 Gew% beträgt und der Fremdstoffgehalt weniger als oder gleich 0,38 Gew% ist; und in der Oberflächenmetallschicht der Gehalt des Zinkoxids 65 bis 87 Gew% beträgt und der Restgehalt weniger als oder gleich 0,15 Gew% ist.

3. Verfahren zur Herstellung des Elektrodendrahts für Elektroerosion nach Anspruch 1 oder 2, umfassend die folgenden Schritte:
Schritt (1): nach dem Qualifizieren von Rohmaterialien, die Kupfer und Zink enthalten, durch chemische Analyse werden die Rohmaterialien compoundiert und gemischt, das resultierende Gemisch wird in einen Netzfrequenz-Induktionsofen zum Schmelzen geladen, und ein Legierungsdrahtausgangsmaterial wird durch Aufwärtsgießen erzeugt, wobei die Temperatur während des Gießens von einer Vorheiztemperatur von 60 °C schrittweise auf eine Höchsttemperatur von 679 °C erhöht wird;
Schritt (2): das hergestellte Legierungsdrahtausgangsmaterial wird abgeschält und danach kaltgewalzt und weichgeglüht, um ein Stabausgangsmaterial mit einer Spezifikation von 7 bis 9,8 mm herzustellen;
Schritt (3): das erhaltene Stabausgangsmaterial wird Dehnung verschiedener Durchgänge unterzogen, um einen Basiskern von 0,88 bis 1,65 mm herzustellen, der dann entfettet, mit Säure gebeizt und mit Wasser gespült wird, um externe Fremdstoffe zu entfernen;
Schritt (4): durch chemische Plattierung, Sprühbeschichtung oder Schmelztauchplattierung wird elektrolytische Abscheidung auf den Basiskern durchgeführt, um ein Verbundstoffausgangsmaterial mit einer Zinkoxidschicht zu erhalten, die auf die Oberfläche davon abgeschieden ist;
Schritt (5): das Verbundstoffausgangsmaterial wird einem Dehn- und Glühprozess unterzogen, um ein vorgefertigtes Drahtausgangsmaterial mit einer normgerechten Größe zu erhalten, wobei die Dehngeschwindigkeit 800 bis 2800 m/min beträgt, die Glühspannung 27 bis 121 V beträgt, und der Glühstrom 13 bis 43 A beträgt;
Schritt (6): das erhaltene vorgefertigte Drahtausgangsmaterial wird einer Oberflächenbehandlung unterzogen, Zink wird bei einer Temperatur von 230 bis 520 °C durch einen internen Heißluftstrom geschmolzen, eine unregelmäßige Form wird auf der Oberfläche des Kernmaterials durch die Oberflächenbehandlung gebildet, und währenddessen wird die Temperatur schrittweise erhöht, um eine Verbundstoffplattierung aus Kupfer und Zink zu bilden, um schließlich ein Elektrodendrahtprodukt zu erhalten; und
Schritt (7): der Elektrodendraht wird zurückerhalten, durch Qualitätsprüfung qualifiziert und dann verpackt und transportiert.

4. Verfahren zur Herstellung des Elektrodendrahts für Elektroerosion nach Anspruch 3, wobei das Weichglühen durch ein zweistufiges Glühverfahren durchgeführt wird, wobei die erste Stufe eine Niedertemperatur-Glühstufe ist, wobei die Temperatur 49 bis 267 °C beträgt, und die Haltezeit 1,7 bis 23 h beträgt; und die zweite Stufe eine Hochtemperatur-Glühstufe ist, wobei die Temperatur 267,2 bis 766 °C beträgt, und die Haltezeit 2,3 bis 33 h beträgt.

5. Verfahren zur Herstellung des Elektrodendrahts für Elektroerosion nach Anspruch 4, wobei die Glühdistanz der ersten Stufe 0,98 bis 3,78 m beträgt, und die Glühdistanz der zweiten Stufe 4,12 bis 11 m beträgt; und die Glühgeschwindigkeit der beiden Stufen 7 bis 570 m/min beträgt.

6. Verfahren zur Herstellung des Elektrodendrahts für Elektroerosion nach Anspruch 3, wobei das Stabausgangsmaterial vor dem plastischen Dehnen für 1 bis 8,8 h einer Wärmebehandlung bei einer Temperatur von 53 bis 600 °C unterzogen wird.

7. Verfahren zur Herstellung des Elektrodendrahts für Elektroerosion nach Anspruch 3, wobei bei der Oberflächenbehandlung das vorgefertigte Drahtausgangsmaterial in einem Heizofen erhitzt wird, der mit einer leitenden Spule versehen ist, die eine geschlossene Rohrleitung umgibt, wobei die leitende Spule während des Durchführens des Erhitzens mit Leistung versorgt wird, und die Leistungsquelle eine Wechselspannung zuführt.

8. Verfahren zur Herstellung des Elektrodendrahts für Elektroerosion nach Anspruch 7, wobei das Walzen durch eine Walze gleichzeitig mit dem Erhitzen zum Durchführen der Oberflächenbehandlung am Kernmaterial ausgeführt wird, derart dass die Oxidschicht kristallisiert wird, um zu reißen.

9. Verfahren zur Herstellung des Elektrodendrahts für Elektroerosion nach Anspruch 7, wobei Trockensandstrahlen gleichzeitig mit dem Erhitzen ausgeführt wird, und ein Sandmaterial auf das vorgefertigte Drahtausgangsmaterial sandgestrahlt wird, derart dass die Oberfläche erodiert wird, um zu reißen.

10. Verfahren zur Herstellung des Elektrodendrahts für Elektroerosion nach Anspruch 9, wobei das Trockensandstrahlen zum Beschleunigen des Strahlens des Sandmaterials mit Druckluft als Energie durch eine pneumatische Sandstrahlvorrichtung oder zum Strahlen des Sandmaterials mit einer Zentrifugalkraft durch ein Hebewerk und einen Hochgeschwindigkeitsdrehtisch verwendet wird.

## Revendications

1. Fil électrode pour usinage par étincelage, comprenant un matériau d'âme et une couche métallique de surface, une couche de transition étant disposée entre le matériau d'âme et la couche métallique de surface,
le matériau d'âme comprenant un alliage de laiton en tant que composant principal et le reste étant du zinc et des impuretés inévitables ; et la couche métallique de surface comprenant de l'oxyde de zinc en tant que composant principal et le reste étant du cuivre et des impuretés inévitables, une couche de transition étant disposée entre le matériau d'âme et la couche métallique de surface, la couche de transition comprenant un alliage de cuivre-zinc en tant que composant principal, et des fissures irrégulières étant réparties sur la couche d'oxyde de zinc ; **caractérisé par le fait que** le matériau d'âme a un diamètre de 0,65 - 1,48 mm, la couche métallique de surface a une épaisseur de 0,45 - 10,23 µm, l'épaisseur maximale des fissures est inférieure ou égale à 4,5 µm, et l'espacement maximal des fissures est de 17 µm.

2. Fil électrode pour usinage par étincelage selon la revendication 1, dans lequel la teneur en alliage de laiton est de 48 - 72 % en poids et la teneur en impuretés est inférieure ou égale à 0,38 % en poids dans le matériau d'âme ; et la teneur en oxyde de zinc est de 65 - 87 % en poids et la teneur du reste est inférieure ou égale à 0,15 % en poids dans la couche métallique de surface.

3. Procédé de fabrication du fil électrode pour usinage par étincelage selon la revendication 1 ou 2, comprenant les étapes suivantes :
étape (1) : une fois que des matières premières contenant du cuivre et du zinc sont déclarées conformes par analyse chimique, les matières premières sont combinées et mélangées, le mélange résultant est chargé dans un four à induction à fréquence de ligne pour fusion, et un fil d'alliage est produit par coulée ascendante, la température pendant la coulée étant progressivement augmentée d'une température de préchauffage de 60°C à une température maximale de 679°C ;
étape (2) : le fil d'alliage produit est scalpé, suivi d'un laminage à froid et d'un recuit d'adoucissement, pour fabriquer une tige ayant une caractéristique de 7 - 9,8 mm ;
étape (3) : la tige obtenue est soumise à un étirement plastique de différentes passes pour fabriquer une âme de base de 0,88 - 1,65 mm qui est ensuite dégraissée, décapée à l'acide et rincée à l'eau afin d'éliminer des impuretés externes ;
étape (4) : un électroplacage est réalisé sur l'âme de base par placage chimique, revêtement par pulvérisation ou placage au bain chaud pour obtenir un composite ayant une couche d'oxyde de zinc déposée sur la surface celui-ci ;
étape (5) : le composite est soumis à un traitement d'étirement-recuit pour obtenir un fil préfini ayant une taille conforme, la vitesse d'étirement étant de 800 - 2800 m/min, la tension de recuit étant de 27 - 121 V et le courant de recuit étant de 13 - 43 A ;
étape (6) : le fil préfini obtenu est soumis à un traitement de surface, du zinc est fondu à une température de 230 - 520°C par un écoulement d'air chaud interne, une forme irrégulière est formée sur la surface du matériau d'âme par traitement de surface et, pendant ce temps, la température est progressivement augmentée pour former un placage composite à partir du cuivre et du zinc, obtenant ainsi au final un produit de fil électrode ; et
étape (7) : le fil électrode est collecté, déclaré conforme par contrôle de qualité, puis emballé et transporté.

4. Procédé de fabrication du fil électrode pour usinage par étincelage selon la revendication 3, dans lequel le recuit d'adoucissement est réalisé par un procédé de recuit à deux étapes, dans lequel la première étape est une étape de recuit à basse température, la température étant de 49 - 267°C et la durée de maintien étant de 1,7 - 23 h ; et la seconde étape est une étape de recuit à haute température, la température étant de 267,2 - 766°C et la durée de maintien étant de 2,3 - 33 h.

5. Procédé de fabrication du fil électrode pour usinage par étincelage selon la revendication 4, dans lequel la distance de recuit de la première étape est de 0,98 - 3,78 m et la distance de recuit de la seconde étape est de 4,12 - 11 m ; et la vitesse de recuit des deux étapes est de 7 - 570 m/min.

6. Procédé de fabrication du fil électrode pour usinage par étincelage selon la revendication 3, dans lequel la tige est soumise à un traitement thermique à une température de 53 - 600°C pendant 1 - 8,8 h avant l'étirement plastique.

7. Procédé de fabrication du fil électrode pour usinage par étincelage selon la revendication 3, dans lequel, dans le traitement de surface, le fil préfini est chauffé dans un four de chauffage qui comprend une bobine conductrice entourant une canalisation fermée, la bobine conductrice est alimentée en courant tandis que le chauffage est effectué, et la source d'alimentation électrique fournit une tension alternative.

8. Procédé de fabrication du fil électrode pour usinage par étincelage selon la revendication 7, dans lequel un laminage est réalisé par un rouleau simultanément au chauffage afin de réaliser le traitement de surface sur le matériau d'âme de telle sorte que la couche d'oxyde est cristallisée de façon à se fissurer.

9. Procédé de fabrication du fil électrode pour usinage par étincelage selon la revendication 7, dans lequel un sablage à sec est réalisé simultanément au chauffage, et un matériau de sable est soufflé sur le fil préfini de telle sorte que la surface est érodée de façon à se fissurer.

10. Procédé de fabrication du fil électrode pour usinage par étincelage selon la revendication 9, dans lequel le sablage à sec est utilisé pour accélérer le soufflage du matériau de sable avec de l'air comprimé comme énergie par un dispositif de soufflage de sable pneumatique, ou pour souffler le matériau de sable avec une force centrifuge par un treuil et un plateau tournant à grande vitesse.
